# EUROPÄISCHE PATENTANMELDUNG

(11) **EP 4 454 795 A1**
(43) Veröffentlichungstag der Anmeldung: **30.10.2024**
(21) Anmeldenummer: 24158054.7
(22) Anmeldetag: 16.02.2024
(51) Int. Cl.: B23C 5/10

(54) **SCHAFTFRÄSER**

(30) Priorität: 27.04.2023 DE 102023110958
(71) Anmelder: Gühring KG, 72458 Albstadt (DE)
(72) Erfinder: Gruber, Jochen, 72514 Inzigkofen (DE)
(74) Vertreter: Winter, Brandl - Partnerschaft mbB

(57) **Zusammenfassung**

Die vorliegende Erfindung betrifft einen Schaftfräser (1; 100) mit einem Schaft (10) und einem Schneidkopf (20) mit einer Anzahl von wendelförmig verlaufenden, durch Spannuten (30) voneinander beabstandeten Schneidstegen (50), wobei die Schneidstege (50) wenigstens über einen Teil ihrer Länge durch eine Anzahl von gegenläufig wendelförmig verlaufenden Teilernuten (40) in Schneidstegsegmente (60) geteilt sind. Der Schneidkopf (20) ist in eine schaftseitige Schneidstufe (22) und eine über einen Übergangsabschnitt (23) an die schaftseitige Schneidstufe (22) anschließende stirnseitige Schneidstufe (24) mit einem gegenüber der schaftseitigen Schneidstufe (22) kleineren Schneiddurchmesser geteilt.

## Beschreibung

Die Erfindung betrifft einen Schaftfräser zur Fräsbearbeitung von Schichtverbundmaterialien, z.B. Faserverbundkunststoffen (FVK) wie kohlenstoff- oder glasfaserverstärkten Kunststoffen (CFK/GFK), sowie zur Abisolierung von Drähten.

Faserverbundkunststoffe sind aufgrund ihrer mehrphasigen Struktur relativ schwer zu bearbeiten. So ist bei der Fräsbearbeitung einer FVK-Platte häufig beispielsweise eine Delamination von Faserverbundschichten oder Faserüberständen an den beiden Plattenoberflächen zu beobachten. Eine wirtschaftliche Bearbeitung moderner Faserverbundkunststoffe erfordert daher insbesondere in der Serienfertigung eine angepasste Werkzeuggestaltung, mit denen sich eine Delamination oder Faserüberstände an einem bearbeiteten FVK-Bauteil zuverlässig vermeiden lässt. Zu den erwähnten Werkzeugen mit angepasster Werkzeuggestaltung zählen beispielsweise Schaftfräser, die als sogenannte Kompressionsfräser ausgeführt sind, bei denen durch eine spezielle Schneidteilgestaltung gegeneinander gerichtete Axialschnittkräfte erzeugt werden. An der Stelle des Zusammentreffens der durch diese Schnittkräfte herkömmlich entstehenden Fasern eines fräsbearbeiteten FVK-Werkstoffs werden diese Fasern komprimiert und schließlich abgetrennt. Dadurch wird einer Delamination oder Faserüberständen an den beiden Plattenoberflächen vorgebeugt.

Aus der Druckschrift US 9 174 287 B2 ist ein Schaftfräser zur Fräsbearbeitung von Schichtverbundmaterialien, z.B. Glasfasern, bekannt, der einen Schaft und einen Schneidkopf mit einer Vielzahl von wendelförmig verlaufenden Hauptspannuten mit positivem Spanwinkel und einer Vielzahl von gegenläufig wendelförmig verlaufenden Hilfsspannuten mit positivem Spanwinkel aufweist, wobei sich die Anzahl der Hauptspannuten und die Anzahl der Hilfsspannuten voneinander unterscheiden. Der Schneidkopf hat über seine gesamte axiale Länge einen konstanten Außendurchmesser. Der Schaftfräser weist zudem mehrere Stirnschneiden auf. Die Hilfsspannuten fungieren als Teilernuten für die Hauptspannuten und teilen die entlang der Hauptspannuten verlaufenden Hauptschneiden in eine Vielzahl von Hauptschneidensegmenten auf. An jedes Hauptschneidensegment schließt stirnseitig ein sich entlang der Hilfsspannut erstreckendes Hilfsschneidensegment an, das durch Ausbildung der entsprechenden Hilfsspannut ausgebildet wird. Insgesamt weist der Schaftfräser der US 9 174 287 B2 dadurch eine Vielzahl von umfangsschneidenden Schneidstegsegmenten auf, die jeweils ein auf dem Werkzeugaußendurchmesser liegendes Hauptschneidensegment und ein auf dem Werkzeugaußendurchmesser liegendes Hilfsschneidensegment enthalten. Durch diese Ausgestaltung können gegeneinander gerichtete Axialschnittkräfte erzeugt werden, die einer Delamination bei der Bearbeitung von Schichtverbundmaterialien entgegenwirken kann.

Nachteilig bei dem Schaftfräser der US 9 174 287 B2 ist, dass die Einsatzmöglichkeiten des Werkzeugs durch die spezielle Ausgestaltung der Schneiden auf die Fräsbearbeitung von Schichtverbundmaterialien begrenzt ist.

Die Druckschrift DE 10 2019 213 976 A1 offenbart ein umfangsschneidendes Fräswerkzeug zur Abisolierung einer Isolationsschicht von einem auch als Hairpin bezeichneten Draht mit im Wesentlichen rechteckförmigem Querschnitt. Das Fräswerkzeug ist als Profilwerkzeug ausgestaltet, d.h., dass die mit Umfangsschneiden ausgestattete wirksame Außenkontur an die Außenkontur des zu bearbeitenden Werkstücks W angepasst ist. Der mit Umfangsschneiden ausgestattete Schneidbereich weist hierzu eine Stufe auf, die das Fräswerkzeug in einen stirnseitigen ersten Abschnitt mit zylindrischer Außenkontur bzw. Hüllfläche mit einem ersten Durchmesser sowie einen durch die Stufe getrennten schaftseitigen zweiten Abschnitt mit zylindrischer Außenkontur bzw. Hüllfläche mit einem zweiten Durchmesser, der größer ist als der erste Durchmesser, aufteilt. Die Außenkontur der Stufe, die einen Übergang vom ersten Abschnitt zum zweiten Abschnitt bildet, ist an die Außenkontur, insbesondere an die Kanten des rechteckförmigen Querschnitts, des Drahts angepasst, wodurch der Draht nach der Abisolierung eine unverletzte saubere Oberfläche aufweist. Die Umfangsschneiden sind nicht unterbrochen und ziehen sich von einer Stirnseite des Werkzeugs bis in den schaftseitigen zweiten Abschnitt.

Ausgehend von einem Schaftfräser wie er aus der US 9 174 287 B2 bekannt ist, liegt der Erfindung daher die Aufgabe zugrunde, einen Schaftfräser zu schaffen, der sich für die Fräsbearbeitung von Schichtverbundmaterialien, z.B. Faserverbundkunststoffen (FVK) wie kohlenstoff- oder glasfaserverstärkten Kunststoffen (CFK/GFK), sowie zur Abisolierung von Drähten, insbesondere sogenannter Hairpin-Drähte, die im Bereich der Statorwicklungen elektrischer Motoren und Generatoren eingesetzt werden, eignet und der damit mehr Einsatzmöglichkeiten bietet.

Diese Aufgabe wird durch einen Schaftfräser mit den Merkmalen des Anspruchs 1 gelöst. Vorteilhafte oder bevorzugte Weiterbildungen sind Gegenstand abhängiger Ansprüche.

Ein erfindungsgemäßer Schaftfräser umfasst einen Schaft und einen Schneidkopf mit einer Anzahl von wendelförmig verlaufenden, durch Spannuten voneinander beabstandeten Schneidstegen, wobei die Schneidstege wenigstens über einen Teil ihrer Länge durch eine Anzahl von gegenläufig wendelförmig verlaufenden Teilernuten in Schneidstegsegmente geteilt sind. Der Schneidkopf ist in eine schaftseitige Schneidstufe und eine über einen Übergangsabschnitt an die schaftseitige Schneidstufe anschließende stirnseitige Schneidstufe mit einem gegenüber der schaftseitigen Schneidstufe kleineren Schneiddurchmesser geteilt.

Jedes Schneidstegsegment weist eine umfangsschneidende Hauptschneide auf, die sich in Erstreckungsrichtung gesehen von einem stirnseitig liegenden Schneidstegsegmenteck bis zu einem schaftseitigen liegenden Schneidstegsegmenteck erstreckt. Die Hauptschneide jedes Schneidstegsegments entspricht der Schnittlinie zwischen der Spanfläche und dem Rücken bzw. einer Freifläche des Schneidstegsegments. In einer Querschnittsansicht in Richtung der Drehachse des Schaftfräsers betrachtet bilden die Spanfläche und der Rücken bzw. die Freifläche des Schneidstegsegments in der dem Fachmann bekannten Art und Weise einen Schneidkeil aus.

Im Unterschied zum Schaftfräser der US 9 174 287 B2 ist der Schneidkopf des erfindungsgemäßen Schaftfräsers in eine schaftseitige Schneidstufe und eine über einen Übergangsabschnitt an die schaftseitige Schneidstufe anschließende stirnseitige Schneidstufe mit einem gegenüber der schaftseitigen Schneidstufe kleineren Schneiddurchmesser geteilt. Durch die am Übergangsabschnitt ausgebildeten Schneidstege oder Schneidstegsegmente kann der Übergangsabschnitt des Schaftfräsers dazu eingesetzt werden, Ecken oder Kanten von im Querschnitt rechteckigen Drähten zu bearbeiten und abzuisolieren. Es können zwei erfindungsgemäße Schaftfräser verwendet werden, die so angeordnet sind, dass deren Drehachsen achsparallel und achsversetzt liegen und die Stirnseiten der Schaftfräser in entgegengesetzte Richtungen zeigen. Die Schaftfräser können an gegenüberliegende Seitenflächen des Drahts zugestellt werden, so dass die Übergangsabschnitte der Schaftfräser zwei diametral gegenüberliegende Ecken oder Kanten des Drahts gleichzeitig bearbeiten können, wenn die um ihre Drehachse rotierenden Schaftfräser relativ zum Draht bewegt werden. Für eine Bearbeitung bzw. Abisolierung der übrigen zwei diametral gegenüberliegenden Ecken oder Kanten des Drahts müssen die beiden Schaftfräser lediglich einmal neu zum Draht positioniert werden.

Es wurde festgestellt, dass der erfindungsgemäße Schaftfräser gute Oberflächenqualitäten bei der Bearbeitung von Schichtverbundmaterialien, z.B. CFK-Werkstoffen, durch eine Fräsbearbeitung mittels der stirnseitigen Schneidstufe und der schaftseitigen Schneidstufe erzielen kann. Weitere Anwendungsgebiete für den erfindungsgemäßen Schaftfräser sind die Bearbeitung von Kunststoffen sowie von leicht zerspanbaren, weichen Metallmaterialien, beispielsweise Kupfer oder Aluminium. Zum anderen eignet sich der Schaftfräser aufgrund des Übergangsabschnitts zwischen der schaftseitigen Schneidstufe und der stirnseitigen Schneidstufe auch besonders zur Abtragung bzw. Abisolierung von relativ weichem Isolationsmaterial von einem insbesondere rechteckförmigem Metalldraht, so dass der Draht nach der Abisolierung eine saubere und unverletzte Oberfläche aufweist. Die Funktion des Übergangsabschnitts ist selbstverständlich nicht auf eine Abisolierung von Ecken oder Kanten eines Drahts beschränkt. Beispielsweise kann der Übergangsabschnitt auch zum Fräsen spezieller Konturen in einem Werkstück eingesetzt werden. Der erfindungsgemäße Schaftfräser stellt somit ein Kombinationswerkzeug dar, das eine Vielzahl von Einsatzmöglichkeiten bietet.

In einer bevorzugten Ausführungsform laufen die Teilernuten im Bereich der stirnseitigen Schneidstufe oder am Übergangsabschnitt aus.

Je nach Einsatzzweck des Schaftfräsers ist eine Raspelgeometrie, die durch die Teilung der durch Spannuten voneinander beabstandeten Schneidstege durch die gegenläufig wendelförmig verlaufenden Teilernuten in Schneidstegsegmente entsteht, nicht notwendig. Wenn die Teilernuten im Bereich der stirnseitigen Schneidstufe oder am Übergangsabschnitt auslaufen, ist eine schnellere und damit wirtschaftlichere Herstellung des Schaftfräsers möglich.

In einer alternativen vorteilhaften Ausführungsform laufen die Teilernuten im Bereich der schaftseitigen Schneidstufe aus.

Dadurch kann die Raspelgeometrie auch auf der schaftseitigen Schneidstufe ausgebildet werden. Wenn die Teilernuten im Bereich der schaftseitigen Schneidstufe auslaufen, insbesondere wie die Spannuten vorteilhaft über die gesamte axiale Länge der schaftseitigen Schneidstufe verlaufen, kann der Herstellungsprozess des Schaftfräsers vereinfacht werden.

In einer bevorzugten Ausführungsform liegt der Nutgrund der Teilernuten auf einem größeren Durchmesser als der Nutgrund der Spannuten.

Da sich die Funktion der Teilernuten in erster Linie auf eine Ausbildung der Raspelgeometrie durch Teilung der Schneidstege beschränkt und das von den Hauptschneiden der Schneidstegsegmente abgetragene Material über die Spannuten abgeführt wird, kann dadurch, dass der Nutgrund der Teilernuten auf einem größeren Durchmesser als der Nutgrund der Spannuten liegt, die Stabilität des Schaftfräsers erhöht werden. Im Vergleich zu Teilernuten, deren Nutgrund auf einem geringeren Durchmesser liegt, weist der Kern des Schaftsfräsers mehr Material eine höhere Festigkeit auf.

Der Nutgrund der Teilernuten kann alternativ dazu jedoch auch auf einem gleichen Durchmesser wie der Nutgrund der Spannuten liegen.

Wenn der Nutgrund der Teilernuten auf einem gleichen Durchmesser wie der Nutgrund der Spannuten liegt, kann der Herstellungsprozess bzw. die Ausbildung der Spannuten und der Teilernuten mittels einer Schleifscheibe vereinfacht werden.

In einer bevorzugten Ausführungsform weisen die Schneidstege Spanflächen mit negativen Spanwinkeln auf. Der negative Spanwinkel ist vorzugsweise kleiner oder gleich 25°, insbesondere 19°.

Der Spanwinkel ist üblicherweise als der Winkel zwischen einer Werkzeugbezugsebene und der Spanfläche definiert. Der negative Spanwinkel sorgt dafür, dass der Schaftfräser das abzutragende Material nicht schneidet, sondern abschält oder abschabt. Es wurde festgestellt, dass sich mit der erfindungsgemäßen Schneidengeometrie des Schaftfräsers gute Oberflächenqualitäten sowohl bei der Bearbeitung von Schichtverbundmaterialien, z.B. CFK-Werkstoffen, als auch bei der Abtragung von relativ weichem Isolationsmaterial von einem Metalldraht, insbesondere Hairpin-Drähten, erzielen lassen. Bei der Fräsbearbeitung faserverstärkter Schichtverbundmaterialien bewirkt der negative Spanwinkel, dass die im Schichtverbund enthaltenen Fasern abgeschält und damit weniger leicht aus dem Schichtverbund herausgerissen werden, wodurch einer Delamination von Fasern oder Faserüberstände an den Fräskanten entgegengewirkt wird. Bei der Abisolierung von Drähten ermöglicht der negative Spanwinkel eine drahtschonende Abtragung des Isolationsmaterials von dem unter der Isolationsschicht liegenden Draht, da die zu den Spanflächen mit negativem Spanwinkel zugehörigen Hauptschneiden der Schneidstegsegmente einen technisch einfacher zu dosierenden Materialabtrag zulässt als Schneidstegsegmente mit Spanflächen mit positivem Spanwinkel.

Vorzugsweise ist der Drallwinkel der Teilernuten größer als der Drallwinkel der Spannuten. Besonders gute Oberflächenqualitäten sowohl bei der Bearbeitung von Schichtverbundmaterialien als auch bei der Abtragung von Isolationsmaterial von Drähten ergeben sich, wenn der Drallwinkel der Spannuten zwischen 10° und 25°, insbesondere zwischen 15° und 19°, liegt, und der Drallwinkel der Teilernuten zwischen 25° und 40°, insbesondere zwischen 29° und 33°, liegt.

In einer bevorzugten Ausführungsform ist der Schneidkopf des Schaftfräsers stirnschneidend ausgebildet.

Durch die Stirnschneiden ist der Schaftfräser in der Lage, durch Eintauchen des Schaftfräsers in Richtung der Drehachse Senkungen in einem Werkstück auszubilden.

Vorzugsweise ist die Anzahl der Spannuten kleiner als die Anzahl der Teilernuten. Wenn die Anzahl der Spannuten zwischen 8 und 14, insbesondere 11, beträgt und die Anzahl der Teilernuten zwischen 12 und 18, insbesondere 15, beträgt, ergibt sich ein sehr guter Kompromiss zwischen einer einfachen und schnellen Fertigung des Schaftfräsers sowie einer ausreichend großen Anzahl an ausgebildeten Schneidstegsegmenten zum Abtragen von Material.

In einer bevorzugten Ausführungsform weisen die Schneidstege bzw. die Schneidstegsegmente Freiflächen auf.

Durch die Freiflächen lässt sich die Reibung zwischen dem Schaftfräser und dem zu bearbeitenden oder abzutragenden Material verringern und die Schnittgeschwindigkeit erhöhen. Die reduzierte Reibung führt zu einer geringeren Hitzeentwicklung und schließlich zu einer höheren Standzeit und längeren Lebensdauer.

Vorzugsweise sind die Freiflächen abgewinkelt. Besonders vorteilhaft ist es, wenn ein erster Freiwinkel eines ersten Freiflächenabschnitts zwischen 8° und 12°, insbesondere 10°, und ein zweiter Freiwinkel eines zweiten Freiflächenabschnitts zwischen 10° und 15°, insbesondere 13°, beträgt.

Im Vergleich zu einer Freifläche mit konstantem Freiwinkel lässt sich durch eine Abwinklung des Freiwinkels, beispielsweise durch den ersten Freiflächenabschnitt und zweiten Freiflächenabschnitt, ein sanfterer Übergang erzielen. Der Keilwinkel der Schneidstegsegmente ist größer, wodurch sich die Stabilität der Schneidstegsegmente verbessert. Dies trägt zu einer höheren Standzeit und längeren Lebensdauer bei.

In einer bevorzugten Ausführungsform sind die Teilernuten enger als die Spannuten.

Wenn die Schneidstege bzw. die Schneidstegsegmente Freiflächen aufweisen, führen die unter einem Drallwinkel verlaufenden Hauptschneiden jedes Schneidstegsegments im Vergleich zum stirnseitigen Schneidensegmenteck den Hauptteil des Materialabtrags durch, so dass sich das abgetragene Material in erster Linie in den Hauptspannuten und nicht in den Teilernuten sammelt. Die im Vergleich zu den Spannuten engeren Teilernuten haben vorwiegend die Funktion, die Schneidstege des Schaftfräsers in Schneidstegsegmente zu teilen. Die breiteren Spannuten können das abgetragene Material einfach aufnehmen und bevorzugt in Richtung des Schafts ableiten.

Vorzugsweise weist jedes Schneidstegsegment eine Hauptschneide auf, die sich von einem stirnseitigen Schneidstegsegmenteck bis zu einem schaftseitigen Schneidstegsegmenteck erstreckt, wobei eine in Richtung der Spannut gemessene Länge der Hauptschneide kürzer ist als eine in Richtung der Teilernut gemessene Länge der Freifläche.

Der Schaftfräser mit den in dieser Ausgestaltung relativ kurzen Hauptschneiden mit den relativ längeren Freiflächen fungiert als Raspel und liefert insbesondere bei einer Abtragung von Isolationsmaterial von einem Draht sehr gute Oberflächenqualitäten.

In einer bevorzugten Ausführungsform weist der Übergangsabschnitt einen Winkel zwischen 50° und 70°, vorzugsweise zwischen 55° und 65°, insbesondere 60°, zu einer Drehachse des Schaftfräsers auf.

Wenn der Übergangsabschnitt einen Winkel zwischen 50° und 70°, vorzugsweise zwischen 55° und 65°, insbesondere 60°, zu einer Drehachse des Schaftfräsers aufweist, wird ein kontinuierlicher und stabiler Übergang zwischen der schaftseitigen Schneidstufe und der stirnseitigen Schneidstufe geschaffen. Der Winkel des Übergangsabschnitts ist vorzugsweise an die Geometrie des zu bearbeitenden Werkstücks angepasst.

In einer bevorzugten Ausführungsform weist eine das Schneidstegsegment bildende stirnseitige Teilernutfläche einen negativen Flankenwinkel auf. Der Flankenwinkel kann zwischen 5° und 25°, vorzugsweise zwischen 10° und 20°, liegen, insbesondere 13° betragen.

Auch wenn die Hauptschneiden der Schneidstegsegmente, die sich jeweils von einem stirnseitigen Schneidstegsegmenteck bis zu einem schaftseitigen Schneidstegsegmenteck erstrecken, den Hauptteil der Zerspanungsarbeit durchführen und das abgetragene Material in erster Linie über die Spannuten abgeführt wird, so erzeugt das stirnseitige Schneidstegsegmenteck auch eine Kraft auf das zu bearbeitende Werkstück, die eine andere Richtung als eine von der Hauptschneide erzeugte Kraft aufweist, z.B. senkrecht zu der von der Hauptschneide erzeugten Kraft gerichtet ist. Das stirnseitige Schneidstegsegmenteck kann eine - wenn auch sehr kleine - Materialmenge in die Teilernut abtragen. Der negative Flankenwinkel, der zwischen 5° und 25°, vorzugsweise zwischen 10° und 20°, liegt, und insbesondere 13° beträgt, kann in gleicher Weise wie ein negativer Spanwinkel der Spanflächen dazu beitragen, gute Oberflächenqualitäten sowohl bei der Bearbeitung von Schichtverbundmaterialien, z.B. CFK-Werkstoffen, als auch bei der Abtragung von relativ weichem Isolationsmaterial von einem Metalldraht zu erzielen.

Die oben diskutierten und weitere Merkmale werden im Folgenden anhand der beiliegenden Zeichnungen am Beispiel zweier Ausführungsformen eines erfindungsgemäßen Schaftfräsers näher erläutert.
Fig. 1 zeigt eine perspektivische Ansicht eines erfindungsgemäßen Schaftfräsers in einer ersten Ausführungsform.
Fig. 2 zeigt eine Seitenansicht eines erfindungsgemäßen Schaftfräsers in einer zweiten Ausführungsform.
Fig. 3 zeigt eine vergrößere Seitenansicht eines Schneidkopfs des Schaftfräsers von Fig. 2.

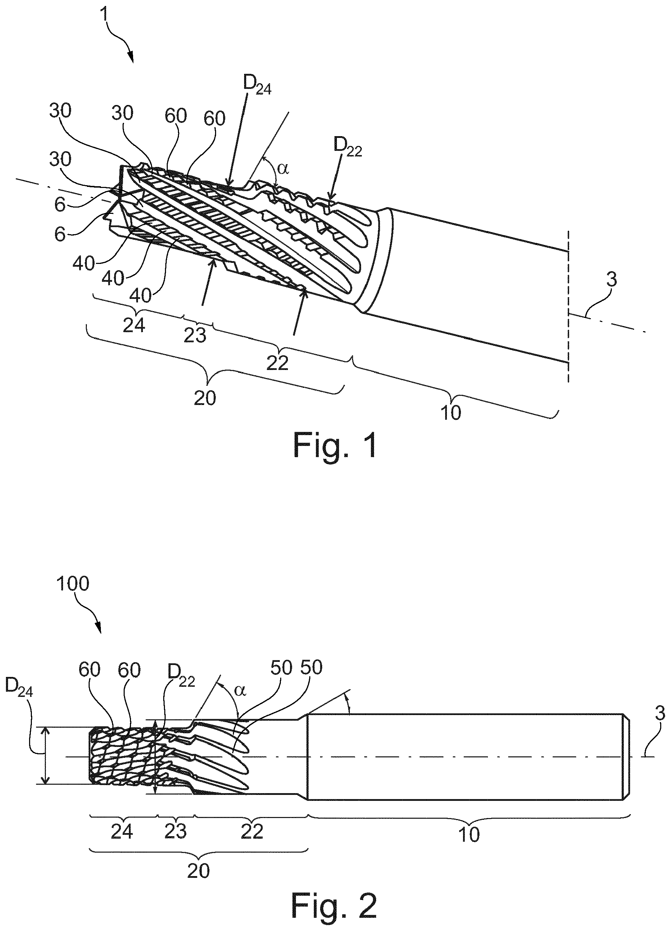

In den Figuren 1 bis 3 kennzeichnen gleiche Bezugszeichen gleiche Elemente.

### Erste Ausführungsform

Die Fig. 1 zeigt eine erste Ausführungsform eines erfindungsgemäßen Schaftfräsers 1 in Form eines Kombinationswerkzeugs, das sowohl zur Fräsbearbeitung von Schichtverbundmaterialien, z.B. Faserverbundkunststoffen (FVK) wie kohlenstoff- oder glasfaserverstärkten Kunststoffen (CFK/GFK), sowie zur Abisolierung von Drähten geeignet ist. Weitere Anwendungsgebiete für den Schaftfräser 1 sind die Bearbeitung von Kunststoffen sowie von leicht zerspanbaren, weichen Metallmaterialien, beispielsweise Kupfer oder Aluminium.

Fig. 1 zeigt den um eine Drehachse 3 drehbaren Schaftfräser 1 in einer perspektivischen Ansicht. Der Schaftfräser 1 weist einen Schaft 10 zum Einspannen des Schaftfräsers 1 in einen nicht dargestellten Werkzeughalter sowie einen Schneidkopf 20 auf, der in eine schaftseitige Schneidstufe 22 mit einem Außendurchmesser D₂₂, einen Übergangsabschnitt 23 und in eine stirnseitige Schneidstufe 24 mit einem Außendurchmesser D₂₄ aufgeteilt ist. Der unter einem Winkel α (beispielsweise 60°) zur Drehachse 3 verlaufende Übergangsabschnitt 23 verbindet die schaftseitige Schneidstufe 22 mit der stirnseitigen Schneidstufe 22. An seiner Stirnseite trägt der Schneidkopf 20 mehrere Stirnschneiden 6.

Der Schneidkopf 20 weist eine Vielzahl von wendelförmig verlaufenden, durch Spannuten 30 voneinander beabstandeten Schneidstegen 50 auf. Die Schneidstege 50 sind durch eine Vielzahl von gegenläufig wendelförmig verlaufenden Teilernuten 40 in mehrere Schneidstegsegmente 60 mit Freifläche geteilt. Die Spannuten 30 sowie die Teilernuten 40 erstrecken jeweils über die gesamte axiale Länge des Schneidkopfs 20, d.h. über die stirnseitige Schneidstufe 24, den Übergangsabschnitt 23 und die schaftseitige Schneidstufe 22. Eine an eine Umfangsschneide der Schneidstegsegmente 60 angrenzende Spanfläche ist durch einen negativen Spanwinkel definiert.

In der ersten Ausführungsform liegt der Nutgrund der Teilernuten 40 auf einem größeren Durchmesser wie der Nutgrund der Spannuten 30.

### Zweite Ausführungsform

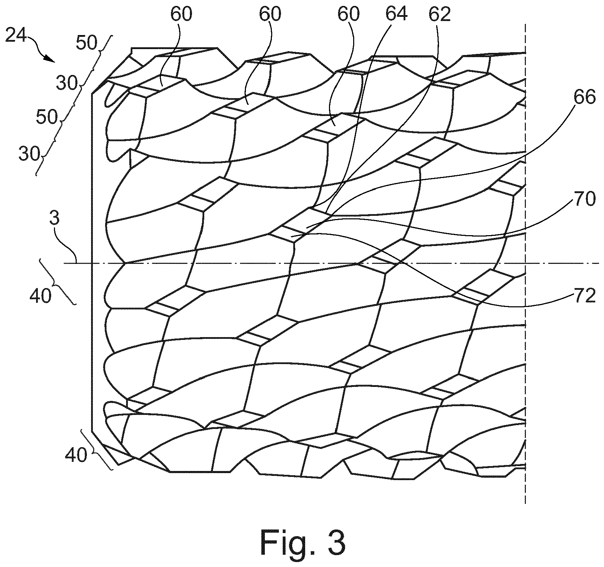

Die Figuren 2 und 3 zeigen eine zweite Ausführungsform eines erfindungsgemäßen Schaftfräsers 100 in Form eines Kombinationswerkzeugs, das sowohl zur Fräsbearbeitung von Schichtverbundmaterialien, z.B. Faserverbundkunststoffen (FVK) wie kohlenstoff- oder glasfaserverstärkten Kunststoffen (CFK/GFK), sowie zur Abisolierung von Drähten geeignet ist. Weitere Anwendungsgebiete für den Schaftfräser 100 sind die Bearbeitung von Kunststoffen sowie von leicht zerspanbaren, weichen Metallmaterialien, beispielsweise Kupfer oder Aluminium.

Der Schaftfräser 100 unterscheidet sich vom Schaffräser 1 zum einen dadurch, dass er keine Stirnschneiden aufweist. Zum anderen erstrecken sich die Teilernuten 40 axial betrachtet nur bis in einen stirnseitigen vorderen Bereich der schaftseitigen Schneidstufe 22. Die Raspelgeometrie ist daher bei dem Schaftfräser 100 nur auf der stirnseitigen Schneidstufe 24 und der Übergangsabschnitt 23 ausgebildet. Die Schneidstege 50 auf der schaftseitigen Schneidstufe 22 nicht durchgängig und nicht in Schneidstegsegmente 60 geteilt. Schließlich liegt der Nutgrund der Teilernuten 40 auf demselben Durchmesser wie der Nutgrund der Spannuten 30.

Die umfangsschneidenden Schneidstege 50 bzw. die umfangsschneidenden Schneidstegsegmente 60 weisen an ihren Rücken abgewinkelte Freiflächen auf. Wie in Fig. 3 dargestellt ist, weist jede Freifläche einen ersten Freiflächenabschnitt 70 mit einem ersten Freiwinkel und einen zweiten Freiflächenabschnitt 72 mit einem zweiten Freiwinkel auf. Durch die Ausbildung der Freiflächen auf den Schneidstegen 50 bzw. den Schneidstegsegmenten 60 entsteht an jedem Schneidstegsegment 60 eine Hauptschneide 62, die sich von einem stirnseitigen Schneidstegsegmenteck 64 bis zu einem schaftseitigen Schneidstegsegmenteck 66 erstreckt.

Eine an die Hauptschneide 62 angrenzende Spanfläche geht in eine in Drehrichtung vorauslaufende Spannut 30 über. Die Spanfläche ist durch einen negativen Spanwinkel definiert. Der Nutgrund der Spannuten 30 ist gerundet und weist einen Radius auf. Ein Nutgrund der Spannuten 30 liegt auf einem Durchmesser, der in der zweiten Ausführungsform dem Durchmesser entspricht, auf dem der Nutgrund der Teilernuten 40 liegt. Der Nutgrund der Teilernuten 40 ist ebenso gerundet und weist einen Radius auf, der kleiner ist als der Radius des Nutgrunds der Spannuten 30.

Der Schaftfräser 100 ist wie der Schaftfräser 1 ein rechtsdrehendes Werkzeug. Die Spannuten 30 bzw. die Schneidstege 50 sind rechtsgedrallt, so dass die Hauptschneiden 62 der Schneidstegsegmente 60 eine Kraft auf das zu bearbeitende Werkstück ausüben, die das abgetragene Material, d.h. Späne oder Isolationsmaterial, in Richtung des Schafts 10 fördert. Die Teilernuten 40 sind linksgedrallt wobei ein Absolutwert des Drallwinkels der Teilernuten 40 relativ zur Drehachse 3 größer ist als ein Absolutwert des Drallwinkels der Spannuten 30 relativ zur Drehachse 3. Schließlich sind die Teilernuten 40 in Drehrichtung gesehen enger als die Spannuten 30. Die Spannuten 30 haben durch ihre relativ große Breite und den Nutgrund mit relativ großem Radius ein ausreichend großes Volumen zum Abführen des von den Hauptschneiden 62 abgetragenen Materials.

Die stirnseitige Schneidstufe 24 kann abweichend von dem in den Figuren 2 und 3 gezeigten Schaftfräser 100 auch in einer dem Fachmann an sich bekannten Weise stirnschneidend ausgebildet sein.

### Bezugszeichenliste

- α: Winkel
- D₂₂: Außendurchmesser
- D₂₄: Außendurchmesser
- 1: Schaftfräser
- 3: Drehachse
- 4: Drehrichtung
- 6: Stirnschneide
- 10: Schaft
- 20: Schneidkopf
- 22: schaftseitige Schneidstufe
- 23: Übergangsabschnitt
- 24: stirnseitige Schneidstufe
- 30: Spannut
- 40: Teilernut
- 50: Schneidsteg
- 60: Schneidstegsegment
- 62: Hauptschneide
- 64: stirnseitiges Schneidstegsegmenteck
- 66: schaftseitiges Schneidstegsegmenteck
- 70: erster Freiflächenabschnitt
- 72: zweiter Freiflächenabschnitt
- 100: Schaftfräser

## Patentansprüche

1. Schaftfräser (1; 100) mit einem Schaft (10) und einem Schneidkopf (20) mit einer Anzahl von wendelförmig verlaufenden, durch Spannuten (30) voneinander beabstandeten Schneidstegen (50), wobei die Schneidstege (50) wenigstens über einen Teil ihrer Länge durch eine Anzahl von gegenläufig wendelförmig verlaufenden Teilernuten (40) in Schneidstegsegmente (60) geteilt sind, **dadurch gekennzeichnet, dass**
der Schneidkopf (20) in eine schaftseitige Schneidstufe (22) und eine über einen Übergangsabschnitt (23) an die schaftseitige Schneidstufe (22) anschließende stirnseitige Schneidstufe (24) mit einem gegenüber der schaftseitigen Schneidstufe (22) kleineren Schneiddurchmesser (D₂₄) geteilt ist.

2. Schaftfräser nach Anspruch 1, **dadurch gekennzeichnet, dass** die Teilernuten (40) im Bereich der stirnseitigen Schneidstufe (24) oder am Übergangsabschnitt (23) auslaufen.

3. Schaftfräser (1; 100) nach Anspruch 1, **dadurch gekennzeichnet, dass** die Teilernuten (40) im Bereich der schaftseitigen Schneidstufe auslaufen.

4. Schaftfräser (1) nach einem der Ansprüche 1 bis 3, **dadurch gekennzeichnet, dass** der Nutgrund der Teilernuten (40) auf einem größeren Durchmesser liegt als der Nutgrund der Spannuten (30).

5. Schaftfräser (1; 100) nach einem der vorhergehenden Ansprüche, **dadurch gekennzeichnet, dass** die Schneidstege (50) Spanflächen mit negativen Spanwinkeln aufweisen.

6. Schaftfräser (1; 100) nach einem der vorhergehenden Ansprüche, **dadurch gekennzeichnet, dass** der Drallwinkel der Teilernuten (40) größer ist als der Drallwinkel der Spannuten (30).

7. Schaftfräser (1) nach einem der vorhergehenden Ansprüche, **dadurch gekennzeichnet, dass** der Schneidkopf (20) stirnschneidend ausgebildet ist.

8. Schaftfräser (1; 100) nach einem der vorhergehenden Ansprüche, **dadurch gekennzeichnet, dass** die Anzahl der Spannuten (30) kleiner ist als die Anzahl der Teilernuten (40).

9. Schaftfräser (1; 100) nach einem der vorhergehenden Ansprüche, **dadurch gekennzeichnet, dass** die Schneidstege (50) Freiflächen aufweisen.

10. Schaftfräser (1; 100) nach Anspruch 9, **dadurch gekennzeichnet, dass** die Freiflächen abgewinkelt sind.

11. Schaftfräser (1; 100) nach einem der vorhergehenden Ansprüche, **dadurch gekennzeichnet, dass** die Teilernuten (40) enger sind als die Spannuten (30).

12. Schaftfräser (1; 100) nach einem der Ansprüche 9 bis 11, **dadurch gekennzeichnet, dass** jedes Schneidstegsegment (60) eine Hauptschneide (62) aufweist, die sich von einem stirnseitigen Schneidstegsegmenteck (64) bis zu einem schaftseitigen Schneidstegsegmenteck (66) erstreckt, wobei eine in Richtung der Spannut (30) gemessene Länge der Hauptschneide (62) kürzer ist als eine in Richtung der Teilernut (40) gemessene Länge der Freifläche.

13. Schaftfräser (1; 100) einem der vorhergehenden Ansprüche, **dadurch gekennzeichnet, dass** der Übergangsabschnitt (23) einen Winkel zwischen 50° und 70°, vorzugsweise zwischen 55° und 65°, insbesondere 60°, zu einer Drehachse (3) des Schaftfräsers aufweist.

14. Schaftfräser (1; 100) einem der vorhergehenden Ansprüche, **dadurch gekennzeichnet, dass** eine das Schneidstegsegment (60) bildende stirnseitige Teilernutfläche einen negativen Flankenwinkel aufweist.
